(19) Europäisches Patentamt
European Patent Office
Office européen des brevets

(11) **EP 3 230 043 B1**

(12) **FASCICULE DE BREVET EUROPEEN**

(45) Date de publication et mention
de la délivrance du brevet:
**24.10.2018 Bulletin 2018/43**

(21) Numéro de dépôt: **15808173.7**

(22) Date de dépôt: **10.12.2015**

(51) Int Cl.:
*B29C 64/118* (2017.01)    *H05K 1/16* (2006.01)
*H05K 3/12* (2006.01)    *B29C 64/106* (2017.01)
*B29C 64/336* (2017.01)    *B29L 31/34* (2006.01)
*B33Y 10/00* (2015.01)    *B33Y 50/02* (2015.01)
*B33Y 80/00* (2015.01)

(86) Numéro de dépôt international:
**PCT/EP2015/079259**

(87) Numéro de publication internationale:
**WO 2016/092021 (16.06.2016 Gazette 2016/24)**

(54) **PROCEDE DE FABRICATION ADDITIVE D'UN OBJET MECATRONIQUE 3D**

GENERATIVE FERTIGUNG EINES MECHATRONISCHEN 3D-OBJEKTS

METHOD FOR ADDITIVE MANUFACTURING OF A 3D MECHATRONIC OBJECT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2014 FR 1462231**

(43) Date de publication de la demande:
**18.10.2017 Bulletin 2017/42**

(72) Inventeur: **AMMI, Mehdi
91300 Massy (FR)**

(74) Mandataire: **Priori, Enrico
Marks & Clerk France
Immeuble "Visium"
22, avenue Aristide Briand
94117 Arcueil Cedex (FR)**

(73) Titulaires:
• **Centre National de la Recherche Scientifique
75016 Paris (FR)**
• **Université Paris-Sud
91405 Orsay (FR)**

(56) Documents cités:
**EP-A1- 2 542 039**    **WO-A2-2012/143923**
**US-A1- 2005 015 175**    **US-A1- 2014 328 964**

**EP 3 230 043 B1**

**Description**

Le domaine de l'invention est celui de la fabrication d'un objet mécatronique 3D qui comporte comme composants :

- un capteur (de force, de pression, de flexion, etc.) et/ou un actionneur (vibreur, translateur, etc.),
- un circuit électronique relié au capteur et/ou à l'actionneur et muni de pistes électriquement conductrices,

ces composants étant disposés dans une structure mécanique principale.

La solution la plus couramment mise en oeuvre pour fabriquer un objet mécatronique 3D, consiste :

- à partir de plusieurs matériaux (diélectriques, électriquement conducteurs, etc), à fabriquer d'une part le capteur et/ou l'actionneur sur un substrat planaire,
- d'autre part à fabriquer la structure mécanique destinée à recevoir le capteur et/ou l'actionneur et sur celle-ci réaliser le circuit électronique correspondant,
- assembler ces deux éléments en reportant le capteur et/ou l'actionneur dans la structure, et en le connectant au circuit électronique.

Aujourd'hui, les techniques de fabrication additive (ou impression 3D) permettent de réaliser des objets 3D complets par addition de matière. Actuellement différents procédés existent afin de contrôler les propriétés mécaniques (ex. densité de matière, type de matière) ou encore l'apparence des objets imprimés (ex. couleur globale ou locale, texture). Ces procédés ne produisent toutefois que des objets passifs sans capacités de percevoir ou d'agir sur l'environnement.

Il existe des techniques d'impression 3D par jet d'encre pour imprimer différents composants électroniques comme les condensateurs, les transistors à effet de champ, les cellules photovoltaïques, les diodes électroluminescentes organiques ou encore les écrans à diodes électroluminescentes organiques (OLED). Pour la réalisation de circuits nécessitant des substrats flexibles ou des substrats de grandes tailles, des approches d'impression 3D en bande continue ou rotative sont également étudiés (flexographie, héliogravure, roll-to-roll, etc.), par exemple pour l'impression d'écrans à flexibles à matrice active de diodes électroluminescentes organiques (AMOLED).

Ces différentes techniques d'impression ont pu se développer grâce à l'émergence de l'électronique organique. Cette branche de l'électronique utilise des matériaux conducteurs et semi-conducteurs dont la formulation est basée sur la chimie du carbone : les polymères. Cette branche de l'électronique est relativement récente puisque les premiers polymères conducteurs ont été mis au point en 1977 (Heeger, McDiarmid, Shirakawa, prix Nobel de chimie de 2000) et les premiers composants électroniques utilisant ces matériaux ont vu le jour au milieu des années 80 : transistor à effet de champ organique (Mitsubishi, 1986) ; diode électroluminescente organique (Kodak, 1987). Aujourd'hui l'électronique organique permet de réaliser de nombreux composants électroniques allant des biocapteurs électrochimiques basés sur des transistors organiques (OFET), comme les capteurs de PH ou d'enzymes, à des actionneurs à base de polymères électroactifs (EAPS), comme les muscles artificiels ou les actionneurs vibrotactiles. Ces travaux utilisent toutefois des procédés de fabrication basiques en réalisant les composants élémentaires (électrode, connecteur, etc.) séparément puis en les assemblant pour former le composant électronique global.

On trouve actuellement quelques recherches qui s'intéressent à l'utilisation des techniques de fabrication additive pour réaliser certains composants électroniques. Ces procédés ne produisent toutefois que des composants sur des substrats planaires ou qui nécessitent des opérations supplémentaires d'assemblage.

Le document US 2014 328964 A1 divulgue une méthode de fabrication d'un objet mécatronique 3D selon le préambule de la revendication 1. Le but de l'invention est de pallier ces inconvénients.

Le procédé repose principalement sur :

- Un choix particulier de matériaux ; il s'agit de matériaux polymères qui présentent différentes propriétés mécaniques, électriques et électro actives.
- Une génération automatique d'un modèle de l'objet 3D à partir des fonctions mécatroniques de l'objet, des propriétés des polymères et de facteurs technologiques voire humains.
- Une impression 3D utilisant le modelage par dépôt de matières en fusion (ou « FDM » acronyme de l'expression anglo-saxonne Fuse Deposition Modeling) qui permet de déposer selon le modèle généré, les polymères choisis afin de fabriquer l'objet 3D c'est-à-dire les différents composants de l'objet (capteur, actionneur, circuit électronique, conditionnement, etc.), au cours des mêmes étapes de modelage.

Plus précisément l'invention a pour objet un procédé de fabrication d'un objet mécatronique 3D de fonctions mécatroniques prédéterminées, conformément à la revendication 1.

Ce procédé permet :

- La réalisation d'objets mécatroniques complets sans avoir recours à une opération d'assemblage et donc sans les inconvénients inhérents à un assemblage (étanchéité, durée de vie et maîtrise de la dilatation d'un joint, etc.),
- Une intégration optimale des composants sur différents plans :

  ◦ spatial : réduction de l'encombrement,
  ◦ mécanique : actionneur/capteur intégré dans la structure, meilleur contact/transmission mécano thermique.
  ◦ électrique : routage électronique optimal, circuit électronique avec structure 3D,

- La personnalisation facile des objets mécatroniques, sur le plan structurel et fonctionnel,
- Un temps de réalisation très court, de quelques minutes à quelques heures,
- L'utilisation de matériaux à faible coût (polymères éventuellement dopés).

Le dépôt de couches de polymères en fusion peut être réalisé au moyen de plusieurs têtes de dépôt, chaque tête étant dédiée à un polymère différent. Au moins une tête est par exemple dédiée à un polymère diélectrique et au moins une autre tête est dédiée à un polymère conducteur.

L'invention concerne aussi un programme d'ordinateur comprenant des instructions de code permettant d'effectuer les étapes du procédé, lorsque ledit programme est exécuté sur un ordinateur, conformément à la revendication 6.

D'autres caractéristiques et avantages de l'invention apparaîtront à la lecture de la description détaillée qui suit, faite à titre d'exemple non limitatif et en référence aux dessins annexés dans lesquels :

les figures 1 illustrent schématiquement des changements dimensionnels induits par un champ électrique appliqué à un polymère électronique (fig 1a), et à un polymère ionique (fig 1b),
la figure 2 représente schématiquement une tête de dépôt couplée à un mécanisme de dopage.

D'une figure à l'autre, les mêmes éléments sont repérés par les mêmes références.

L'objet mécatronique 3D à fabriquer est défini par ses fonctions mécatroniques mises en oeuvre par des composants, capteur et/ou actionneur, circuit électronique, structure mécanique principale, constitués de plusieurs polymères de propriétés électroniques ou électromécaniques différentes. La structure mécanique principale peut ellemême comporter des articulations, éventuellement contrôlées.

Le procédé de fabrication de cet objet comporte les étapes suivantes.

- Déterminer les polymères à utiliser pour fabriquer cet objet, en fonction des propriétés des polymères telles que température de fusion, compatibilité chimique, propriétés électriques ou électromécaniques,
- déterminer un modèle numérique de l'objet 3D notamment sa forme, le routage des pistes électriquement conductrices, et la structure et la composition des composants mécatroniques. La définition du modèle prend en considération les fonctions mécatroniques prédéterminées de l'objet, des propriétés des polymères, des performances de l'objet prédéterminées,
- imprimer en 3D le capteur et/ou l'actionneur, le circuit électronique et la structure principale au cours des mêmes étapes de modelage par dépôt de couches de matières en fusion, certaines couches étant constituée de plusieurs polymères.

Le procédé repose sur l'utilisation de polymères. Ces matériaux sont intéressants car ils sont légers, synthétisables à de faibles températures, faciles à utiliser à une échelle industrielle, recyclables, peu coûteux, et compatibles avec le modelage par dépôt de matière en fusion.

Les polymères sont connus essentiellement pour leurs propriétés diélectriques. Des recherches sont parvenues à mettre en évidence les capacités de certains polymères à conduire l'électricité. Ces dernières décennies ont vu apparaitre des polymères qualifiés de "matériaux intelligents" ("Smart Materials"). Ces polymères présentent différents comportements, par exemple mécaniques ou électroluminescents, sous l'action de stimuli physiques tels que la lumière, l'acidité, la chaleur, un champ magnétique ou électrique. Dans le cas d'une réaction à un champ électrique, on parle de polymères électro actifs. Ces polymères ont la capacité de transformer l'énergie électrique en énergie mécanique, par exemple en se déformant (flexion, compression, dilatation, etc.). Cette propriété est adaptée pour réaliser divers transducteurs électromécaniques tels que les actionneurs ou capteurs.

Ces différentes propriétés (isolant électrique, conducteur électrique, transducteur électromécanique) sont utilisées pour réaliser les différents composants passifs et actifs des objets mécatroniques.

Les trois principales familles de polymères utilisées dans ce procédé sont :

- Les polymères diélectriques,
- Les polymères conducteurs électriques,
- Les polymères électro actifs.

I) Polymère diélectrique

Il s'agit d'un matériau thermoplastique qui sert à construire la structure mécanique principale de l'objet et qui joue le rôle d'isolant électrique dans la réalisation des différents composants et structures électroniques. Il existe une grande variété de matériaux thermoplastiques qui présentent différentes propriétés physiques. Le choix du matériau dépend des propriétés que l'on souhaite attribuer à l'objet ou à certaines parties ou composantes de l'objet, telles que :

∘ Propriétés diélectriques (support de composants, isolant/condensateur, coque de composant, etc.) : rigidité diélectrique, angle de perte, électricité électrostatique, etc.

∘ Propriétés mécaniques globales (squelette) et locales (zones de saisie/contact, capteur de force/flexion, transmission mécanique, etc.) : masse volumique, rigidité, flexibilité, élasticité, résistance aux pressions/flexions/torsions, etc.

∘ Propriétés thermiques : capacité thermique, conductivité thermique, etc.

∘ Propriétés biologiques : réaction/inertie chimique, toxicité, etc.

∘ Propriétés visuelles : transparence/opacité, couleur, brillance/rugosité etc.

∘ Propriétés ergonomiques : confort de contact, rugosité de surface, texture, etc.

Un autre point important guide le choix du matériau : le point de fusion du polymère diélectrique et des autres polymères impliqués dans la fabrication de l'objet (polymères conducteurs, électromécaniques, etc.). En effet, il est nécessaire d'utiliser des matériaux présentant des points de fusion proches afin de ne pas faire fondre les parties déjà imprimées et qui seront en contact avec le matériau en cours de dépôt.

Le tableau suivant présente certains polymères diélectriques compatibles d'une impression 3D par dépôt de matière en fusion.

| Matériau | Point de fusion | Propriétés |
|---|---|---|
| Acrylonitrile butadiène styrène (ABS) | 130° | • Dure<br>• Anti-chocs<br>• Léger<br>• Opaque |
| Acide polylactique (PLA) | 145° | • Transparent<br>• Matériau compostable |
| Polyester (PCL) | 60° | • Non-toxique<br>• Anallergique<br>• Isolant thermique<br>• Isolant acoustique<br>• Hydrophobe |
| Polyépoxyde (Epoxy) | 50° | • Inertie biologique |
| Polyvinylchloride (PVC) | 180° | • Différent niveaux de rigidité mécanique<br>• Opaque/transparent |
|  |  | • Anti-dérapant/lisse<br>• Mat/irisé<br>• Inertie biologique |

(suite)

| Matériau | Point de fusion | Propriétés |
|---|---|---|
| Polycarbonate (PC) | 140° | • Excellente résistance aux chocs<br>• Stabilité dimensionnelle en ambiance humide<br>• Bonne résistance thermique (-135 °C et 135 °C)<br>• Innocuité physiologique<br>• Transparent |
| Polypropylene (PP) | 145° -> 175° | • Dur/semi-rigide<br>• Hydrophobe<br>• Résistant à l'abrasion<br>• Résistant à la flexion<br>• Translucide/opaque |
| Polystyrene (PS) | 240° | • Anti-chocs<br>• Résistance à la compression<br>Imperméabilité / Nettoyabilité<br>• Faible densité<br>• Isolation thermique |
| Polyurethane (TPU) | 230° | • Elasticité (type caoutchouc)<br>• Résistance au cisaillement<br>• Résistant à l'abrasion<br>• Transparence |

II) Polymère conducteur électrique

Le matériau conducteur intervient dans la réalisation de différentes composantes de l'objet mécatronique :

- Pistes conductrices électriques et connecteurs des composants

- Composants électroniques : électrodes de condenseur, fil de l'inductance, résistance, etc.

- Transducteurs

  ◦ Mécaniques (capteur) : contact, pression, flexion, etc.
  ◦ Thermiques (actionneur) : élément chauffant

- Conducteurs thermiques : stimulation thermique, refroidissement, etc.

Il existe deux grands types de polymères conducteurs :

A) Les polymères conducteurs intrinsèques (PCI), dont la conductivité doit être augmentée par dopage avec des atomes donneurs ou accepteurs d'électrons (dopage chimique, électrochimique, etc.). Actuellement, parmi les polymères conducteurs intrinsèques dopés qui ont une bonne stabilité chimique et de bonnes propriétés mécaniques, on peut citer : le polyparaphénylène, le polythiophène, le polypyrrole ou la polyaniline. Ces matériaux ne sont toutefois pas adaptés au modelage par dépôt de matière en fusion car les températures de fusion altèrent partiellement ou totalement leurs propriétés électriques, voire mécaniques.

B) Les polymères conducteurs par dopage interstitiel : il s'agit d'un polymère composite constitué d'un polymère non-conducteur dopé avec des charges conductrices afin d'augmenter la conductivité du polymère composite. Le dopage consiste à ajouter des particules chargées au polymère non-conducteur à l'état liquide. Il n'y a pas de réaction chimique entre les deux matériaux pendant ou après le dopage. Les propriétés mécaniques du polymère composite sont proches de celle du polymère non-conducteur, et ses propriétés électriques sont proches de celle des charges conductrices. Il est nécessaire d'utiliser pour le polymère non-conducteur et les charges conductrices, des matériaux qui sont compatibles avec les températures du modelage par dépôt de matière en fusion : il faut que la température de dégradation >> point de fusion.

La conductivité du polymère composite résultant dépend de :

- La conductivité des charges conductrices,
- La proportion des charges conductrices dans la matrice du polymère,
- La forme des charges conductrices,
- La distribution spatiale des charges conductrices,
- L'interaction structurelle et électrique polymère/charges conductrices.

Sur la base de la forme et de la distribution des charges conductrices, il est possible de définir le « Packing-factor » (F) qui exprime le volume proportionnel des charges dans le composite.

$$F = \frac{V_{char}}{V_{char} + V_{com}}$$

$V_{char}$: *Volume occupé par les charges*
$V_{com}$: *Volume du composite*

Ce facteur F définit plusieurs propriétés et paramètres du composite :

- Conductivité (S/m)
- Seuil de percolation
- Propriétés mécaniques
- Propriétés thermiques.

Le tableau suivant présente quelques types de charges conductrices et certaines caractéristiques du polymère composite résultant :

| Charges conductrices | Polymère non-conducteur | Point de fusion | Résistivité | Autres propriétés |
|---|---|---|---|---|
| Particules métalliques : nickel, cuivre, argent, etc. | • PS <br><br> • Polyimide siloxane (SIM-2030M) <br><br> • Epoxy <br> • PVC | 260° (PS/nickel) <br><br><br> 200-300° (SIM/nickel) | • 10-5 $\Omega$-m (PS/nickel) <br><br> • 10-6 $\Omega$-m (SIM/nickel) <br> • 10-6 $\Omega$-m (SIM/Argen) | • Très bonne conductivité électrique <br><br> • Bonne conductivité thermique |
| Noir de carbone | • PP <br> • PMMA <br> • PEHD <br> • ABS <br> • PCL | 60° (PCL) -> <br><br><br> 190° (PEHD) | • 10-1 $\Omega$-m -> <br><br><br> • 10 $\Omega$-m | • Point de fusion bas <br> • Quantité réduite de charges <br> • Piézorésistif <br> • Antistatique |
| Nanotubes de carbone | • TPU <br><br> • PU <br><br> • Polyamino amide | 400° (TPU) | • 10-2 $\Omega$-m -> <br><br><br> • 10-6 $\Omega$-m | • Bonne résistance mécanique <br> • Bonne élasticité (PU) <br> • Bon conducteur thermique |

(suite)

| Charges conductrices | Polymère non-conducteur | Point de fusion | Résistivité | Autres propriétés |
|---|---|---|---|---|
| Fibres de carbone | • HDPE | 130° (HDPE) | • 10-4 $\Omega$-m (FC+graphite) | • Textile actif |
| | • EVA | | • 10-2 $\Omega$-m (FC) -> <br> • 102 $\Omega$-m (FC) | |
| Céramique conductrice : PZT, etc. | • HDPE <br> • PMMA <br> • Epoxy | 130° (HDPE) | • 10-1 $\Omega$-m (HDPE) | • Piézoélectrique |

D'autres types de charges conductrices peuvent également être utilisées :

- Fibres métalliques
- Particules minérales métallisées
- Particules de polymères conducteurs intrinsèques.

En plus de contrôler la conductivité électrique du polymère composite, le matériau des charges conductrices permet d'influencer certaines propriétés mécaniques ou thermiques du polymère composite en le rendant plus solide (fibre de carbone) ou plus thermiquement conducteur (charges métalliques). Il peut également lui conférer de nouvelles fonctionnalités (voir ci-dessous avec les polymères électroactifs), par exemple la piézoélectricité (céramique) ou la piézorésistivité (noir de carbone).

III) Polymère électro actif

Ce matériau permet la réalisation de composants électro actifs nécessaires notamment pour doter l'objet à fabriquer de capacités mécaniques de perception et d'action. Deux principales classes de composants peuvent être réalisées :

1) les capteurs (contact, pression, etc.) et/ou
2) les actionneurs (actionneur vibrotactile, actionneur de flexion, actionneur linaire, etc.).

Le procédé selon l'invention utilise des polymères électroactifs (Electroactive polymers : EAPS) notamment comme transducteurs électromécaniques. Ces polymères légers et flexibles sont capables de répondre à une stimulation électrique par un changement de dimensions et de formes (mode actionneur). Il est également possible de les polariser sous l'effet d'une contrainte mécanique (mode capteur).
Deux grandes catégories de polymères électroactifs existent : la famille électronique et la famille ionique.

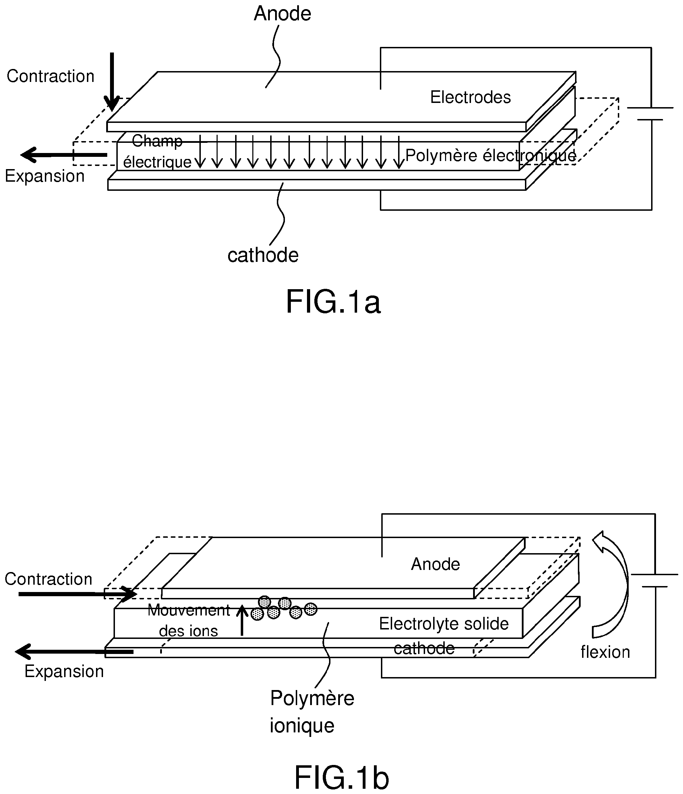

A) Les polymères électroniques (Electronics EAPS) sont activés par un champ électrique extérieur. Généralement, le polymère électronique est positionné entre deux électrodes, par exemple à base d'un polymère conducteur, afin de lui appliquer un champ électrique, par exemple pour mesurer sa polarisation, sa tension. Le champ électrique soumet le polymère électronique à des forces résultant de la polarisation électrique (forces intrinsèques), et à la force de Coulomb qui s'exerce sur les électrodes (forces extrinsèques). Ces forces conduisent à des changements dimensionnels (contraction transversale => expansion longitudinale), comme illustré figure 1a.
La famille des polymères électroniques est composée de sous familles qui présentent différentes propriétés électriques intrinsèques et processus d'activation :

- Polymère ferroélectrique
- Electrets
- Elastomère diélectrique
- Elastomère électrostrictif greffé
- Papier électroactif
- Elastomère électroviscoélastique
- Elastomère LCE (liquid cristal elastomer)

B) Les polymères ioniques (Ionic EAPS) sont basés sur une diffusion dans le matériau d'ions ou de molécules, induite par un champ électrique. Cette diffusion d'ions ou de molécules produit des changements dimensionnels du matériau (contraction/expansion des électrodes => flexion de la structure globale) comme illustré figure 1b. Les actionneurs exploitant ce type de polymères comportent deux électrodes entre lesquelles une tension est appliquée, par exemple à base d'un polymère conducteur, séparées par un électrolyte polymère solide (ou liquide).

La famille des polymères ioniques est également composée de sous familles qui exploitent différents principes physiques ou chimiques :

- Gel ionique
- Composite ionique (IPMC)
- Polymère conducteur ionique (CP)
- Nanotubes de carbone
- Fluide électro rhéologique.

Ces deux grandes catégories de polymères électro actifs présentent différentes propriétés électromécaniques qui déterminent leurs performances :

- Le coefficient de couplage électromécanique qui traduit la capacité à convertir l'énergie électrique en énergie mécanique,
- Le champ électrique d'activation dont le champ électrique minimum pour induire un changement dimensionnel,
- La déformation maximum qui traduit le changement dimensionnel maximum (longitudinal),
- La pression maximum que le polymère peut appliquer,
- Le module de Young qui exprime la rigidité/élasticité du matériau,
- La densité d'énergie qui exprime l'énergie mécanique maximum par cycle et par unité de volume du matériau,
- Le temps de réponse,
- La durée de vie.

Le tableau suivant résume les principaux avantages et inconvénients de chaque catégorie.

| Catégorie | Avantages | Inconvénients |
|---|---|---|
| Polymères électroniques | ■ Force générée importante <br> ■ Temps de réponse faible <br> ■ Durée de vie importante <br> ■ Fonctionnement en condition ambiante | ■ Champ électrique d'activation important (20 à 150 MV/m) <br> ■ Sens de déformation unique |
| Polymères ioniques | ■ Déplacements importants | ■ Temps de réponse important |
| | ■ Champ électrique d'activation faible (10kV/m) <br><br> ■ Sens de déformation liée à la polarité du champ électrique | ■ Force générée faible <br> ■ Fonctionnement dans des conditions spécifiques <br> ■ Faible couplage électromécanique |

Le tableau suivant donne pour chaque catégorie et certaines sous familles des polymères électro actifs, un exemple de matériau compatible avec le modelage par dépôt de matière en fusion.

| Sous famille | Exemple de matériau | Champ électrique d'activation (V/m) | Pression maximum (MPa) | Coefficient de couplage (%) | Remarques |
|---|---|---|---|---|---|
| Polymère ferro-électri-que | ▪ Polymères PVDF<br>▪ Copolymère P (VDF-TrFE)<br>▪ Macro Fiber Composites (MFC)<br>▪ Active Fiber Composite (AFC) | ▪ PVDF : $10^5$<br>▪ AFC : $10^4$<br>▪ MFC : $10^3$ | ▪ PVDF:5<br>▪ AFC : 40<br>▪ MFC : 31 | ▪ PVDF :33<br>▪ AFC : 73<br>▪ MFC : 72 | ▪ Coût de fabrication élevé<br>▪ Rendement faible<br>▪ Force utile élevée<br>▪ Très faible déformation<br>▪ Petite taille =>fréquence importante |
| Elastomère électro-strictif greffé | ▪ Terpolymère P (VDF-TrFE1-CTFE) | $10^7$ | 20 | 25 à 55 | ▪ Faibles pertes<br>▪ Prix élevé<br>▪ Haute tension d'alimentation |
| Elastomère diélectrique | ▪ Acrylique 3M VHB 4910<br>▪ Silicone Nusil CF 19-2186<br>▪ Polyurethane Deerfield PT<br>▪ 6100 S<br>▪ Fluoroelastomer LaurenL 143HC<br>▪ Polybutadiene Aldrich PBD | ▪ Silicone Nusil: $10^8$<br>▪ Polyuretha ne Deerfield : $10^8$<br>▪ Fluoroelastomer LaurenL : $10^8$ | ▪ Silicone Nusil: 0.72<br>▪ Polyurethane Deerfield: 3.8<br>▪ Fluoroelastomer LaurenL : 0.39 | ▪ Silicone Nusil: 54<br>▪ Polyurethane Deerfield : 21<br>▪ Fluoroelastomer LaurenL : 15 | ▪ Grande déformation<br>▪ Coût faible<br>▪ Durée de vie importante |
| Polymère conducteur ionique (CP) | ▪ PANI (Polyaniline)<br>▪ PPy (Polypyrolle) | 10 | 34 | 2 à 12 | ▪ PPy : point de fusion 300 °C |
| IPMC | ▪ Nafion<br>▪ Flemion | Nafion: 10 à $10^2$ | Nafion: 10 à 30 | Nafion : 3 | ▪ Fabrication complexe<br>▪ Très faible tension d'alimentation |

Le choix du matériau à utiliser pour la réalisation des électrodes est important également. Afin d'offrir le meilleur compromis entre conductivité électrique pour une application optimale du champ électrique, et élasticité nécessaire pour accompagner les changements dimensionnels du polymère électromécanique, on utilise des polymères élastomères dopés avec des charges conductrices (Voir la section polymères conducteurs).

Par exemple, il est possible de réaliser un actionneur tactile (vibreur) avec les polymères AFC ou MFC positionnés entre deux électrodes conductrices réalisées avec le polymère HDPE.

Les polymères qui seront utilisés pour la fabrication ayant été choisis, l'étape suivante est la génération automatique d'un modèle de l'objet 3D par un logiciel.

Le modèle est généré à partir :

- des fonctions mécatroniques de l'objet à réaliser, qui sont prédéterminées,

- des polymères choisis et

- de spécifications de base saisies par l'utilisateur au moyen d'une interface utilisateur. Il entre des informations basiques de type : bracelet, vibrotactile, dimension du poignet, etc.

Le logiciel se charge ensuite de proposer une structure mécanique principale et de dimensionner et positionner le circuit électronique et les autres composants.

Le dimensionnement des composants est lié aux propriétés mécaniques, électriques et électro actives des polymères utilisés, des facteurs humains (psychophysique, seuils de perception, etc.) et des fonctionnalités spécifiées par l'utilisateur.

L'utilisation simultanée de plusieurs composants électroniques dans la fabrication de l'objet nécessite un routage optimal des pistes électroniques. Au-delà des propriétés électriques, le logiciel prend aussi en considération les propriétés mécaniques et structurelles (points de flexion, rigidité, etc.) de l'objet.

Le logiciel de conception suit le processus suivant :

- Positionnement des actionneurs/capteurs en prenant en compte des facteurs ergonomiques : structure extérieure de l'objet (bracelet, objet à empoigner, etc.), morphologie de l'utilisateur (taille, forme, etc.), zones de stimulation, sensibilité (tactile), seuil de perception relatif et absolu, etc.

- Dimensionnement des actionneurs/capteurs en prenant en compte des facteurs psychophysiques et électromécaniques,

- Dimensionnement et forme de la structure mécanique principale en prenant en compte des facteurs mécaniques, électromécaniques et ergonomiques : transmission mécaniques et thermique, intensité des déformations/vibrations, intégration structurelle, etc.

- Routage électronique en prenant en compte des facteurs électriques et électroniques : conductivité d'une piste/électrode, influence entre pistes, routage des pistes électroniques, etc.

Par exemple, pour ajouter une fonctionnalité vibrotactile à un bracelet, le logiciel prend en considération le seuil de perception tactile minimum et relatif au niveau du poignet. En fonction de ce seuil, il détermine l'intensité de la perception que le composant vibreur doit appliquer. Le logiciel dimensionne ensuite le polymère central (positionné entre les électrodes comme montré figures 1a et 1b) qui est par exemple un AFC ou MFC, et les électrodes de stimulation afin de générer la pression requise. L'ensemble est ensuite positionné automatiquement à la surface intérieure du bracelet afin d'être en contact avec le bras de l'utilisateur.

Pour rajouter un capteur tactile de pression sur un objet intelligent (« Smart Object »), le logiciel prend en considération l'emplacement du contact et la gamme de force appliquée pour créer un motif 2D sur la surface de l'objet avec un polymère conducteur piézoélectrique (HDPE ou PMMA). La déformation du motif conduit à une modification de la résistivité du conducteur ce qui permet de mesurer la force appliquée.

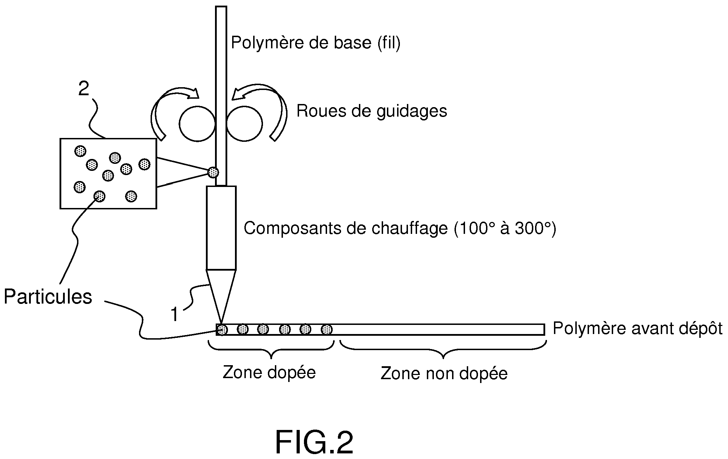

Le modèle de l'objet 3D ainsi obtenu est envoyé vers une imprimante spécifique qui le découpe en tranches et dépose les polymères couche par couche pour obtenir l'objet 3D final. Selon l'invention, certaines couches sont constituées de plusieurs polymères comme on peut le voir figure 2 (zone dopée, zone non dopée) et peuvent être ajourées (la surface n'est pas entièrement couverte).

L'impression 3D utilise un modelage par dépôt de matières en fusion ou FDM. On rappelle que ce modelage consiste à faire fondre un filament de polymère à travers une tête de dépôt (ou buse ou extrudeur) chauffée à une température variant entre 160 et 270 °C. Un petit fil de polymère en fusion, d'un diamètre de l'ordre du dixième de millimètre, en sort. Ce fil est déposé en ligne et vient se coller par re-fusion sur ce qui a été déposé au préalable.

On peut utiliser deux stratégies de dépôt de matière par fusion pour réaliser les objets électromécaniques.

La première stratégie de dépôt consiste à utiliser une imprimante 3D classique à modelage par dépôt de matière en fusion, mais avec plusieurs têtes de dépôt (aussi désignées buses d'extrusion) au lieu d'une seule, chaque tête étant dédiée au dépôt d'un polymère différent. Il faut au minimum deux têtes de dépôt pour déposer un matériau conducteur et un matériau isolant. Cette configuration permet de réaliser la structure mécanique et les composants passifs (piste conductrice, capteur résistif de pression/contact, etc.). L'ajout d'une autre tête de dépôt permet de déposer un polymère électro actif pour la réalisation des transducteurs actifs comme les actionneurs vibrotactiles ou actionneurs de flexion. La température de fonctionnement de chaque tête de dépôt dépend du point de fusion du polymère déposé. Il est donc nécessaire de choisir un ensemble de polymères (isolant, conducteur et électro actif) présentant des points de fusion proches.

La deuxième stratégie de dépôt consiste à utiliser une matrice de base (c'est-à-dire un polymère diélectrique de base) et à l'enrichir avec des particules chargées au moment du dépôt. En fonction de la nature des particules injectées, le polymère acquiert différentes propriétés de conduction ou électromécaniques. Cette approche permet un meilleur contrôle du dopage et donc des propriétés électriques (conductivité/résistivité électrique), mécaniques (rigidité/élasticité), thermiques (conductivité) et électromécaniques (coefficient de couplage électromécanique, etc.) du matériau déposé. Cette approche présente l'avantage d'utiliser le même polymère de base pour la réalisation de l'ensemble de l'objet ce qui permet d'éviter le problème de compatibilité chimique et de points de fusion différents entre polymères différents. En effet, les propriétés mécaniques du polymère de base restent dominantes par rapport aux propriétés du dopant.

A cet effet on utilise une imprimante 3D à modelage par dépôt de matière en fusion, équipée d'une tête de dépôt. Une seule tête de dépôt 1 suffit dans la mesure où elle est couplée à un mécanisme 2 de dopage ou d'enrichissement avec des particules comme montré figure 2 ; il s'agit d'un dopage interstitiel de manière à obtenir différents polymères pour une même couche. Ce mécanisme est une tête d'éjection de particules (par exemple par pression) positionnée avant ou après le mécanisme de chauffage de la tête de dépôt principale.

Il est possible d'utiliser plusieurs têtes de dopage respectivement couplées à des mécanismes de dopage afin d'injecter différent types de particules.

Parmi les objets mécatroniques pouvant ainsi être fabriqués, on peut citer : des structures mécaniques rigides ou flexibles (bracelet), des cartes électroniques, des capteurs tels qu'une jauge de contrainte, un capteur d'inductance électrodermale, une sonde thermique, des actionneurs tels qu'un haut-parleur, un vibreur, un actionneur linéaire, des composants électroniques tels qu'une résistance, un condensateur, une inductance.

Ce procédé de fabrication peut notamment s'implémenter à partir d'éléments matériels et/ou logiciels. Il peut être disponible en tant que produit programme d'ordinateur comprenant des instructions de code permettant d'effectuer les étapes du procédé de fabrication. Ce programme est enregistré sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention qui est définie par l'objet des revendications 1 à 6.

## Revendications

1. Procédé de fabrication d'un objet mécatronique 3D de fonctions mécatroniques prédéterminées, qui comporte comme composants au moins un capteur et/ou un actionneur, un circuit électronique connecté au capteur et/ou à l'actionneur par des pistes électriquement conductrices, ces composants étant disposés dans une structure mécanique principale, et qui est constitué de plusieurs polymères de propriétés électroniques et/ou électro actives différentes, **caractérisé en ce qu'**il comporte les étapes suivantes :

   - déterminer lesdits polymères en fonction de leur température de fusion, leur compatibilité chimique, leurs propriétés électriques et/ou électro actives,
   - déterminer un modèle numérique 3D de l'objet incluant sa forme et le routage des pistes, à partir des fonctions mécatroniques de l'objet, des propriétés desdits polymères, et de performances de l'objet prédéterminées,
   - imprimer en 3D le capteur et/ou l'actionneur, le circuit électronique et la structure principale au cours des mêmes étapes de modelage selon le modèle généré, par dépôt de couches desdits polymères en fusion, certaines couches étant constituée de plusieurs polymères, **caractérisé en ce que** le dépôt de couches est réalisé au moyen d'au moins une tête dédiée à un polymère de base (1) et couplée à un mécanisme de dopage (2) apte à injecter des particules chargées dans le polymère de base, par dopage interstitiel de manière à obtenir les différents polymères.

2. Procédé de fabrication d'un objet mécatronique 3D selon la revendication 1, **caractérisé en ce que** le dépôt de couches de polymères en fusion est réalisé au moyen de plusieurs têtes de dépôt, chaque tête étant dédiée à un polymère différent.

3. Procédé de fabrication d'un objet mécatronique 3D selon la revendication précédente, **caractérisé en ce qu'**au moins une tête est dédiée à un polymère diélectrique et au moins une autre tête est dédiée à un polymère conducteur.

**4.** Procédé de fabrication d'un objet mécatronique 3D selon l'une des revendications précédentes, **caractérisé en ce que** la structure mécanique principale comporte des articulations.

**5.** Procédé de fabrication d'un objet mécatronique 3D selon la revendication précédente, **caractérisé en ce que** les articulations sont contrôlées.

**6.** Un produit programme d'ordinateur, ledit programme d'ordinateur comprenant des instructions de code permettant d'effectuer les étapes du procédé selon l'une quelconque des revendications 1 à 5, lorsque ledit programme est exécuté sur un ordinateur.

**Patentansprüche**

**1.** Fertigungsverfahren eines mechatronischen 3D-Objekts mit vorbestimmten mechatronischen Funktionen, welches als Komponenten mindestens einen Sensor und/oder ein Stellglied und einen elektronischen Schaltkreis, welcher an den Sensor und/oder das Stellglied durch elektrische Leiterbahnen angeschlossen ist, beinhaltet, wobei diese Komponenten in einer mechanischen Hauptstruktur angeordnet sind, und welches aus mehreren Polymeren mit unterschiedlichen elektronischen und/oder elektroaktiven Eigenschaften besteht, **dadurch gekennzeichnet, dass** das Verfahren folgende Schritte beinhaltet:

- Bestimmen der Polymere angesichts ihrer Schmelztemperatur, ihrer chemischen Kompatibilität und ihrer elektronischen und/oder elektroaktiven Eigenschaften,
- Bestimmen eines numerischen 3D-Modells des Objekts, einschließlich seiner Form und des Routings der Leiterbahnen, anhand der mechatronischen Funktionen des Objekts, der Eigenschaften der Polymere und der vorbestimmten Leistungsmerkmale des Objekts,
- Drucken in 3D des Sensors und/oder des Stellgliedes, des elektronischen Schaltkreises und der Hauptstruktur im Zuge derselben Modellierungsschritte gemäß dem erzeugten Modell, durch Ablagerung von Schichten der geschmolzenen Polymere, wobei bestimmte Schichten aus mehreren Polymeren bestehen, **dadurch gekennzeichnet, dass** die Ablagerung von Schichten mit Hilfe von mindestens einem Kopf erfolgt, welcher einem Grundpolymer (1) zugewiesen und mit einem Dotierungsmechanismus (2) gekoppelt ist, welcher in der Lage ist, geladene Partikel in das Grundpolymer zu injizieren durch interstitielles Dotieren, sodass die unterschiedlichen Polymere erhalten werden.

**2.** Fertigungsverfahren eines mechatronischen 3D-Objekts nach Anspruch 1, **dadurch gekennzeichnet, dass** das Ablagern von Schichten geschmolzener Polymere mit Hilfe mehrerer Ablagerungsköpfe erfolgt, wobei jeder Kopf einem anderen Polymer zugewiesen ist.

**3.** Fertigungsverfahren eines mechatronischen 3D-Objekts nach dem vorhergehenden Anspruch, **dadurch gekennzeichnet, dass** mindestens ein Kopf einem dielektrischen Polymer zugewiesen ist und mindestens ein anderer Kopf einem leitenden Polymer zugewiesen ist.

**4.** Fertigungsverfahren eines mechatronischen 3D-Objekts nach einem der vorhergehenden Ansprüche, **dadurch gekennzeichnet, dass** die mechanische Hauptstruktur Gelenke beinhaltet.

**5.** Fertigungsverfahren eines mechatronischen 3D-Objekts nach dem vorhergehenden Anspruch, **dadurch gekennzeichnet, dass** die Gelenke gesteuert werden.

**6.** Computerprogrammprodukt, wobei das Computerprogramm Code-Befehle umfasst, welche es ermöglichen, die Schritte des Verfahrens nach einem der Ansprüche 1 bis 5 durchzuführen, wenn das Programm auf einem Computer ausgeführt wird.

**Claims**

**1.** A method for manufacturing a 3D mechatronic object having predetermined mechatronic functions, which includes as components at least one sensor and/or one actuator, an electronic circuit connected to the sensor and/or to the actuator via electrically conductive tracks, these components being positioned in a main mechanical structure, and which consists of multiple polymers having different electronic and/or electroactive properties, **characterized in**

**that** it includes the following steps:

- determining said polymers according to their melting temperature, their chemical compatibility, their electrical and/or electroactive properties;
- determining a 3D digital model of the object, including its shape and the routing of the tracks, on the basis of predetermined mechatronic functions of the object, properties of said polymers and specifications of the object;
- 3D-printing the sensor and/or the actuator, the electronic circuit and the main structure in the same modeling steps according to the generated model by depositing layers of said molten polymers, certain layers being made up of a plurality of polymers, **characterized in that** the layers are deposited by means of at least one head dedicated to a base polymer (1) and coupled to a doping mechanism (2) capable of injecting charged particles into the base polymer by interstitial doping so as to obtain the various polymers.

2. The method for manufacturing a 3D mechatronic object according to claim 1, **characterized in that** the molten polymer layers are deposited by means of a plurality of deposition heads, each head being dedicated to a different polymer.

3. The method for manufacturing a 3D mechatronic object as claimed in the preceding claim, **characterized in that** at least one head is dedicated to a dielectric polymer and at least one other head is dedicated to a conductive polymer.

4. The method for manufacturing a 3D mechatronic object as claimed in one of the preceding claims, **characterized in that** the main mechanical structure includes articulations.

5. The method for manufacturing a 3D mechatronic object as claimed in the preceding claim, **characterized in that** the articulations are controlled.

6. A computer program product, said computer program comprising code instructions allowing the steps of the method as claimed in any one of claims 1 to 5 to be carried out, when said program is executed on a computer.

Polymère de base (fil)

2

Roues de guidages

Composants de chauffage (100° à 300°)

Particules

1

Polymère avant dépôt

Zone dopée      Zone non dopée

FIG.2

EP 3 230 043 B1

## RÉFÉRENCES CITÉES DANS LA DESCRIPTION

**Documents brevets cités dans la description**

- US 2014328964 A1